# EUROPEAN PATENT APPLICATION

(11) **EP 0 758 752 A1**
(43) Date of publication of application: **19.02.1997**
(21) Application number: 96202208.3
(22) Date of filing: 06.08.1996
(51) Int. Cl.: G01S 13/87

(54) **An implement for localizing an animal**

(30) Priority: 11.08.1995 NL 1000969
(71) Applicant: MAASLAND N.V., 3155 PD Maasland (NL)
(72) Inventor: Van der Lely, Olaf, 6312 Steinhausen (CH); Van der Lely, Alexander, 6340 Baar (CH)
(74) Representative: Mulder, Herman

(57) **Abstract**

The invention relates to an implement for localizing animals, such as cows. Said implement comprises localizing means (8, 11, 13, 14, 17, 18) for tracing the location of an animal selected out of the group of animals. By means of acoustic and/or optic signals, supplied by the localizing means (8, 11, 13, 14, 17, 18), there is obtained an indication regarding the location of the relevant animal. The localizing means (8, 11, 13, 14, 17, 18) comprise at least one transmitter and receiver unit. The transmitter and receiver unit is adapted to read out a code of a responder (11) of a cow identification system and thus to determine the location of the animal.

## Description

The invention relates to an implement for localizing animals, such as cows.

A suchlike implement is known.

In an implement of the above-mentioned type it is possible to trace the location of a certain group of animals. When the farmer wishes to separate a specific animal from this group, e.g. in order to inseminate same or to have it examined by a veterinary surgeon, then the farmer has to select the relevant animal out of the group, on the basis of e.g. the animal's optic characteristics, such as its spots pattern. This is a time-consuming job, whereby mistakes may be made, e.g. when animals resemble each other very much. Furthermore, only a limited number of people is able to identify the animals.

The invention aims at obtaining an implement of the above-mentioned type, in which these drawbacks do not occur or are at least limited to a considerable extent.

According to the invention, this will be achieved by providing the implement with localizing means for tracing the location of an animal selected out of the group of animals and whereby by means of acoustic and/or optic signals an indication can be obtained regarding the location of the selected animal. Hence, by means of said localizing means, it is even possible for a layman to separate a specific animal from the herd in a quick and efficient manner.

When the livestock is split up into several groups of animals which are accommodated separately, then, according to a further inventive feature, the localizing means comprise one or more transmitter and receiver units. In a preferred embodiment according to the invention, the receiver unit is adapted to read out a code of a responder of a cow identification system. This has the advantage that the animals do not need to be provided with an extra responder for the localizing system, but that the responder of the cow identification system can be utilized. In a first embodiment according to the invention, the localizing means comprise a number of lamps, which are arranged in the neighbourhood of the animals and whereby the lamp arranged in the immediate vicinity of an animal to be traced is activated by the responder of the relevant animal as soon as the operating person retrieves the location of the animal by means of the transmitter unit.

In a preferred embodiment according to the invention, at least one lamp is designed as a searchlight, by means of which a beam of light is focussed automatically on the animal to be traced.

In a second embodiment according to the invention, the localizing means comprise a number of loudspeakers, which are arranged in the neighbourhood of the animals and/or are disposed on the animals, and whereby the loudspeaker which is arranged in the immediate vicinity of an animal to be localized and/or is disposed on the animal is activated by the animal's responder as soon as an operating person retrieves the location of the relevant animal by means of the transmitter unit. On the basis of the sound produced by the loudspeaker the relevant animal can quickly be localized.

In a third embodiment according to the invention, the localizing means comprise sensors, arranged in a grid pattern in the neighbourhood of the animals, and whereby the sensor disposed in the vicinity of an animal to be traced supplies a signal to a computer, after which the computer shows the position of a relevant animal on a display.

In a preferred embodiment according to the invention, the computer including the display is compact and portable. In accordance with a further inventive feature, the sensors are disposed on the ceiling of the stable or cowshed.

In a fourth embodiment according to the invention, the localizing means comprise a movable transmitter and receiver unit, by means of which a responder of an animal to be traced can be localized. The movable transmitter and receiver unit has the advantage that neither sensors nor other means need to be arranged in a cowshed or similar accommodation. Furthermore the movable transmitter and receiver unit can be utilized with a group of animals staying e.g. in a meadow, without further adjustments being required. In accordance with a further inventive feature, the movable transmitter and receiver unit includes a directional aerial, while the movable transmitter and receiver unit supplies acoustic and/or optic signals, which intensify as the directional aerial is moved further in the direction of the responder and the distance between the responder and the transmitter and receiver unit decreases. In this manner the farmer can determine in what direction he has to walk and whether he is still far away from the relevant animal.

In a preferred embodiment according to the invention, the localizing means are connected with the computer of a milking robot in such a way that the location of an animal put on the attention list by the computer can immediately be determined. This may be the case when the milking robot has e.g. ascertained that a specific animal is infected with mastitis. With the aid of the localizing means, the veterinary surgeon who wishes to treat the relevant animal will be able to trace the animal and to separate same from the group of animals in a quick and efficient manner. When using the localizing means according to the invention, it is not strictly necessary to provide a cowshed with a separation room, in which e.g. the animals figuring in the attention list are usually separated from the other animals by the milking robot.

In a fifth embodiment according to the invention, the localizing means comprise a Global Positioning System. In the so-called GPS there is used satellite navigation equipment, which can be utilized in nearly every place.

For a better understanding of the invention and to show how the same may be carried into effect, reference will now be made, by way of example, to the accompanying drawings, in which:
Figure 1 shows, in plan view, a cowshed in which a first embodiment of an implement for localizing animals is provided;
Figure 2 is a cross-sectional view of the cowshed, taken on the line II - II in Figure 1;
Figure 3 shows, in plan view, a cowshed in which a third. embodiment of an implement for localizing animals in accordance with the invention is provided;
Figure 4 shows a cross-section of the cowshed, taken on the line IV - IV in Figure 3;
Figure 5 is a plan view of a cowshed, in which is shown a fourth implement for localizing animals in accordance with the invention.

In the drawings, corresponding parts have been indicated by the same reference numerals.

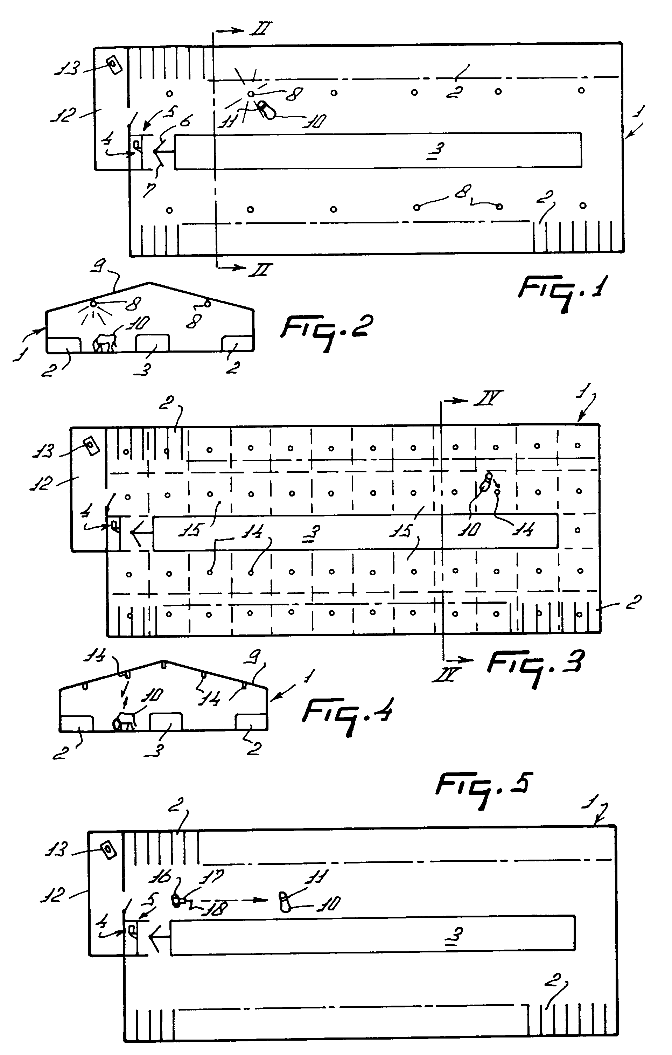

Figure 1 is a plan view of a cowshed 1, which is provided at both longitudinal sides with a row of cubicles 2 and in its centre with a feed alley 3. At one end of the feed alley 3 there is arranged a milking robot 4, by means of which (non-shown) teat cups can automatically be connected to the teats of an animal to be milked. The milking robot 4 is provided near a milkbox 5 and comprises a computer-controlled entrance door 6 and a computer-controlled exit door 7. In the cowshed 1 there is additionally provided a row of lamps 8 on either side of the feed alley 3 in the longitudinal direction of said cowshed. As shown in Figure 2, the lamps 8 are fixed to the ceiling 9 of the cowshed 1. In the cowshed 1 there is furthermore shown a cow 10 wearing a collar provided with a responder 11. In the present embodiment, the responder 11 constitutes part of a (non-shown) cow identification system, by means of which individual animals can be identified out of a group of animals. Near the milking robot 4 the cowshed 1 is moreover provided with a control room 12 in which there is disposed a computer 13. In the cowshed 1 there is additionally provided a (non-shown) transmitter and receiver unit, by means of which the location of e.g. a cow 10 can be determined.

The function of the first embodiment in accordance with the invention will be explained in what follows. When an operating person wishes to determine the location of an animal preselected out of a group, e.g. the cow 10, then the operating person activates the transmitter unit of the localizing means. By means of the transmitter unit there is transmitted through the entire cowshed 1 a code which is specific for the cow 10 and can only be recognized by the responder 11 of said cow. Then the responder 11 of the cow 10 transmits a unique code, which is recognized by the receiver unit of the localizing means, whereupon, by means of said receiver unit, the location of the cow 10 in the cowshed 1 can be determined. For the purpose of being recognized by an operating person, this location is marked by lighting a lamp 8, being closest to the cow 10.

In a second embodiment in accordance with the invention, the lamps 8 of the above-described embodiment are replaced by loudspeakers. The loudspeakers may also be disposed on the animals by means of e.g. a collar. In the second embodiment, the attention of the operating person is drawn to the location of the preselected animal by means of acoustic signals.

Figure 3 shows a third embodiment of an implement for localizing animals in accordance with the invention. In this third embodiment, a number of sensors 14 is provided in the cowshed according to a certain grid pattern. As is shown in Figure 4, the sensors 14 are disposed on the ceiling 9 of the cowshed 1 in five juxtaposed rows. Each of the sensors 14 covers, in plan view, a substantially square area 15 in the cowshed 1. When the cow 10 is in one of these areas and the operating person retrieves the location of the cow 10, then the sensor 14 present in the relevant area 15 reads out the responder 11 of the relevant animal, while a (non-shown) display of the computer 13 shows a view of the cowshed 1 in which the location of the cow 10 is indicated.

Figure 5 shows a fourth embodiment of localizing means in accordance with the invention. Figure 5 represents an operating person 16 provided with a movable transmitter/receiver unit 17 including a directional aerial 18. The function of the transmitter/receiver unit 17 is as follows. When the operating person 16 has selected a specific animal by means of the transmitter/receiver unit, said person scans the cowshed 1 by means of the directional aerial 18. When the directional aerial 18 is moved in the direction of the selected cow 10, then, via a (non-shown) loudspeaker there is supplied an acoustic signal to the transmitter/receiver unit 17. The more the directional aerial is moved in the direction of the responder 11 of the cow 10 to be traced, the more the intensity of the signal supplied by the loudspeaker increases. Then the operating person 16 knows that the location of the cow 10 is in the direction to which the directional aerial 18 is orientated. When the operating person 16 moves in that direction, the intensity of the sound supplied will increase as the distance between the responder 11 and the transmitter/receiver unit 17 decreases. When the operating person 16 is close to the cow 10, the loudspeaker will supply an other sound as a confirmation that the cow 10 which has been localized is the selected cow 10. It will be obvious that besides acoustic signals also e.g. light signals or other similar signals can be supplied by the transmitter/receiver unit 17 in order to trace a selected animal.

The invention is not restricted to the aforementioned description, but also relates to all the details of the drawings and/or the description.

## Claims

1. An implement for localizing animals, such as cows, characterized in that the implement comprises localizing means (8, 11, 13, 14, 17, 18) for tracing the location of an animal (10) selected out of the group of animals and whereby by means of acoustic and/or optic signals an indication can be obtained regarding the location of the selected animal (10).

2. An implement as claimed in claim 1, characterized in that the localizing means (8, 11, 13, 14, 17, 18) comprise one or more transmitter and receiver units.

3. An implement as claimed in claim 2, characterized in that the receiver unit is adapted to read out a code of a responder (11) of a cow identification system.

4. An implement as claimed in claim 1, 2 or 3, characterized in that the localizing means (8, 11, 13, 14, 17, 18) comprise a number of lamps (8), which are arranged in the neighbourhood of the animals and whereby the lamp (8) arranged in the immediate vicinity of an animal (10) to be traced is activated by the responder (11) of the relevant animal as soon as an operating person retrieves the location of the animal (10) by means of the transmitter unit.

5. An implement as claimed in claim 4, characterized in that at least one lamp (8) is designed as a searchlight, by means of which a beam of light is focussed automatically on the animal (10) to be traced.

6. An implement as claimed in any one of the preceding claims, characterized in that the localizing means (8, 11, 13, 14, 17, 18) comprise a number of loudspeakers, which are arranged in the neighbourhood of the animals and/or are disposed on the animals and whereby the loudspeaker arranged in the immediate vicinity of an animal to be localized and/or disposed on the animal is activated by the animal's responder as soon as an operating person retrieves the animal's location by means of the transmitter unit.

7. An implement as claimed in claim 4, 5 or 6, characterized in that the lamps and/or loudspeakers are fixed to the ceiling (9) of a cowshed (1).

8. An implement as claimed in any one of the preceding claims, characterized in that the localizing means (8, 11, 13, 14, 17, 18) comprise sensors (14), arranged in a grid pattern in the neighbourhood of the animals, and whereby the sensor (14) disposed in the vicinity of an animal (10) to be traced supplies a signal to a computer (13), after which the computer (13) shows the position of a relevant animal (10) on a display.

9. An implement as claimed in claim 8, characterized in that the sensors (14) are disposed on the ceiling (9) of the cowshed (1).

10. An implement as claimed in any one of the preceding claims, characterized in that the localizing means (8, 11, 13, 14, 17, 18) comprise a movable transmitter and receiver unit (17), by means of which a responder (11) of an animal to be traced can be localized.

11. An implement as claimed in claim 10, characterized in that the movable transmitter and receiver unit (17) includes a directional aerial (18), while the movable transmitter and receiver unit (17) supplies acoustic and/or optic signals, which intensify as the directional aerial (18) is moved further in the direction of the responder (11) and the distance between the responder (11) and the transmitter and receiver unit (17) decreases.

12. An implement as claimed in any one of the preceding claims, characterized in that the localizing means (8, 11, 13, 14, 17, 18) are connected with the computer (13) of a milking robot (4) in such a way that the location of an animal put on the attention list by the computer (13) can immediately be determined.

13. An implement as claimed in any one of the preceding claims, characterized in that the localizing means comprise a Global Positioning System.

14. An implement as claimed in any one of the preceding claims and/or as represented in the accompanying description and drawings.
